# EUROPÄISCHE PATENTANMELDUNG

(11) **EP 4 364 912 A1**
(43) Veröffentlichungstag der Anmeldung: **08.05.2024**
(21) Anmeldenummer: 23205956.8
(22) Anmeldetag: 26.10.2023
(51) Int. Cl.: B27B 5/20, B23D 59/00, B23Q 1/54, B23Q 11/00

(54) **ELEKTRISCHE BEARBEITUNGSMASCHINE**

(30) Priorität: 03.11.2022 DE 102022129083
(71) Anmelder: Mafell AG, 78727 Oberndorf a.N. (DE)
(72) Erfinder: Daus, Felix, 78655 Dunningen-Seedorf (DE)
(74) Vertreter: Manitz Finsterwald Patent- und Rechtsanwaltspartnerschaft mbB

(57) **Zusammenfassung**

Eine elektrische Bearbeitungsmaschine (10) umfasst ein Gestell (11), eine Arbeitseinheit (15), die ein Arbeitswerkzeug (13) aufweist, und ein Getriebe (17), über welches die Arbeitseinheit (15) an dem Gestell (11) angebracht ist und welches ausgebildet ist, eine geführte Arbeitsbewegung der Arbeitseinheit (15) relativ zu dem Gestell (11) zu ermöglichen. Das Getriebe (17) weist ein Getriebeelement (27) auf, das zum Auffangen von Spänen oder Staub, die beim Bearbeiten eines Werkstücks (W) mit dem Arbeitswerkzeug (13) auftreten, ausgebildet ist.

## Beschreibung

Die Erfindung betrifft eine elektrische Bearbeitungsmaschine, insbesondere eine Säge, beispielsweise eine Kappsäge oder eine Kapp-Zug-Säge.

Derartige Bearbeitungsmaschinen sind grundsätzlich bekannt, beispielsweise in Form von sogenannten Kappsägen, aber auch in Form anderer Maschinen zur Bearbeitung beispielsweise von Werkstücken aus Holz, Kunststoff oder Metall.

Bei derartigen Bearbeitungsmaschinen ist die Arbeitseinheit am Gestell relativ zu diesem bewegbar angebracht, um eine Arbeitsbewegung der Arbeitseinheit und damit des Bearbeitungswerkzeugs relativ zu dem Gestell und relativ zu einem jeweils zu bearbeitenden Werkstück durchzuführen. Bei Kappsägen, die insbesondere dazu dienen, meist eine langgestreckte Form besitzende Werkstücke, wie beispielsweise Leisten aus Holz oder Schienen oder Rohre aus Kunststoff oder Metall, zu kappen, also zu kürzen, ist die mit dem Sägeblatt versehene Arbeitseinheit um eine einzige horizontale Achse verschwenkbar am Gestell angebracht.

Von Kappsägen, aber auch von anderen Bearbeitungsmaschinen, wird in der Praxis häufig verlangt, auch vergleichsweise große Werkstücke zu bearbeiten. Hierfür ist ein relativ großer Arbeitsbereich oder bei einer Kappsäge eine relativ große Schnittlänge erforderlich. Um eine große Schnittlänge zu erreichen, wird die Arbeitseinheit nach dem Herunterschwenken linear in einer horizontalen Richtung bewegt, beispielsweise mittels Führungsstangen. Kappsägen, die mit einer derartigen Zugfunktion entlang einer linearen Achse versehen sind, werden auch als Kapp-Zug-Sägen bezeichnet. Die zusätzliche Linearführung, insbesondere die hierfür vorgesehenen Linearauszüge und Lagerungselemente, haben zur Folge, dass derartige Maschinen einen vergleichsweise großen Bauraum benötigen und zudem relativ schwer sind. Dabei ist die Linearführung außerdem relativ großen Biegebelastungen ausgesetzt. Die erforderliche Anordnung der für die Linearführung vorgesehenen Bauteile ist in der Praxis eher schlecht für die Aufnahme derartiger Kräfte geeignet. Hieraus resultiert insgesamt eine nicht zu vernachlässigende Durchbiegung des Systems, was letzten Endes unpräzise Sägeschnitte zur Folge hat.

Ein ordentliches Auffangen und Absaugen von bei der Werkstückbearbeitung entstehenden Spänen oder Staub ist ein wesentliches Qualitätsmerkmal einer Bearbeitungsmaschine. Allerdings ist dies insbesondere bei Kappsägen erschwert, da bei Kappsägen der Austritt der Späne über einen relativ großen Bereich erfolgt, da die entstehenden Späne bei Zugschnitten vertikal nach oben herausgeschleudert werden, während bei Kappschnitten der Austritt der Späne eher in eine näherungsweise horizontale Richtung in eine dem Bearbeiter angewandte Richtung erfolgt. Insbesondere das Auffangen der näherungsweise horizontal austretenden Späne stellt sich in der Praxis regelmäßig schwierig dar.

Es ist eine Aufgabe der vorliegenden Erfindung, eine Bearbeitungsmaschine vorzuschlagen, die gegenüber konventionellen Bearbeitungsmaschinen ein verbessertes Auffangen von Spänen oder Staub ermöglicht.

Diese Aufgabe wird durch eine elektrische Bearbeitungsmaschine mit den Merkmalen des Anspruchs 1 gelöst. Vorteilhafte Weiterbildungen sind Gegenstand der abhängigen Ansprüche.

Die erfindungsgemäß elektrische Bearbeitungsmaschine ist insbesondere eine Säge, beispielsweise eine Kappsäge oder eine Kapp-Zugsäge, und umfasst ein Gestell, eine Arbeitseinheit, die ein Arbeitswerkzeug aufweist, und ein Getriebe, über welches die Arbeitseinheit an dem Gestell angebracht ist und welches ausgebildet ist, eine geführte Arbeitsbewegung der Arbeitseinheit relativ zu dem Gestell zu ermöglichen, wobei das Getriebe ein Getriebeelement aufweist, das zum Auffangen von Spänen oder Staub, die beim Bearbeiten eines Werkstücks mit dem Arbeitswerkzeug auftreten, ausgebildet ist.

Erfindungsgemäß ist also vorgesehen, dass die Bearbeitungsmaschine mit einem Getriebe versehen ist und ein Element des Getriebes zusätzlich zu seiner Funktion als Teil des Getriebes eine Funktion zum Auffangen von Spänen oder Staub wahrnimmt. Zum einen ermöglicht dies, dass mehrere Funktionen durch ein einziges Bauteil wahrgenommen werden können und dieses optimal genutzt werden kann. Zum anderen kann durch eine solche Ausgestaltung der vollständige Austrittsbereich der Späne bzw. des Staubs abgedeckt werden. Dadurch, dass eine großzügige Ausgestaltung des Getriebeelements möglich ist, kann zudem eine großzügige Auffanggeometrie verwirklicht werden.

Das Getriebe kann insbesondere einen Freiheitsgrad von f = 2 aufweisen und so dem Anwender eine entsprechende Freiheit beim Führen der Arbeitseinheit geben. Getriebe sind dem Fachmann grundsätzlich bekannt. Diese umfassen beispielsweise eine Basis und eine Koppel, die durch Schwingen miteinander verbunden sind. Bei den Schwingen kann es sich jeweils um starre Elemente handeln, die gelenkig mit der Basis und der Koppel verbunden sind. Bei der erfindungsgemäßen Integration eines Getriebes in die Bearbeitungsmaschine bildet das Gestell die Basis, und die Arbeitseinheit bildet eine Koppel des Getriebes.

Das Getriebe ist insbesondere so ausgebildet, dass der Arbeitsbereich der Arbeitseinheit nicht auf eine Bahnkurve beschränkt, sondern durch eine zweidimensionale Fläche gebildet ist, welche beispielsweise in einer vertikalen Ebene liegen kann. Dies ermöglicht es dem Anwender, wenn die Bearbeitungsmaschine beispielsweise als Kappsäge ausgeführt ist, die Arbeitseinheit nach Belieben in dieser Ebene - bei einer Säge als Schnittebene bezeichnet - zu führen, wodurch verschiedenartige Schnitte, wie zum Beispiel ein rein vertikales Kappen, ein Kappen mit Zugfunktion oder Nutschnitte, durchgeführt werden können. Ein weiterer Vorteil ist, dass die funktionale Trennung zwischen dem Kappen und dem Ziehen für den Anwender praktisch nicht wahrnehmbar ist.

Das Getriebe kann einen Zweischlag, der ein erstes Getriebeglied und ein durch ein Getriebegelenk mit dem ersten Getriebeglied verbundenes zweites Getriebeglied umfasst, und einen Mechanismus zur Beschränkung eines durch den Zweischlag vorgegebenen Arbeitsbereiches der Arbeitseinheit aufweisen, der ein drittes Getriebeglied und ein viertes Getriebeglied umfasst. Das dritte Getriebeglied kann durch ein erstes Gelenk mit dem ersten Getriebeglied verbunden sein, und das vierte Getriebeglied kann durch ein zweites Gelenk mit dem dritten Getriebeglied und durch ein drittes Gelenk mit dem zweiten Getriebeglied verbunden sein. Vorzugsweise ist das vierte Getriebeglied das Getriebeelement zum Auffangen von Spänen oder Staub.

Während das Getriebe, das insbesondere einen Freiheitsgrad von f = 2 aufweist, es dem Anwender erlaubt, das Sägeaggregat undefiniert in einer lediglich durch die Länge der Getriebeglieder beschränkten und planaren Arbeitsebene zu bewegen, kann durch den Mechanismus zur Beschränkung des durch den Zweischlag vorgegebenen Arbeitsbereichs der Arbeitseinheit dafür gesorgt werden, dass die Arbeitseinheit unerwünschte Positionen relativ zu dem Gestell nicht erlangen kann. Verkürzt gesagt ist der Arbeitsbereich durch das Getriebe frei, aber durch den Mechanismus beschränkt, das heißt innerhalb von durch den Mechanismus vorgegebenen Grenzen kann die Arbeitseinheit frei bewegt werden. Die Beschränkung ist allerdings nicht in dem Sinne zu verstehen, dass durch sie die Anzahl der Freiheitsgrade des Getriebes reduziert wird.

Der durch das Getriebe vorgegebene Arbeitsbereich ist dabei der ohne den Mechanismus theoretisch mögliche Arbeitsbereich, dessen Grenzen alleine durch die mechanischen Gegebenheiten des Getriebes, insbesondere Abmessung und Lage der Getriebeglieder, vorgegeben ist. Der beschränkte Arbeitsbereich ist der tatsächliche Arbeitsbereich, in welchem die Arbeitseinheit eine bestimmungsgemäße Bearbeitung von Werkstücken durchführen kann.

Das Getriebeelement zum Auffangen von Spänen oder Staub kann wenigstens eine, vorzugsweise zwei Lagerstellen für ein Gelenk aufweisen. Wenn das Getriebeelement dem vierten Getriebeglied entspricht, können die Lagerstellen für das zweite Gelenk und/oder das dritte Gelenk vorgesehen sein.

In vorteilhafter Ausgestaltung weist das Getriebeelement einen Auffangabschnitt und einen sich vorzugsweise zwischen den Lagerstellen erstreckenden Getriebeabschnitt auf. Der Getriebeabschnitt ist vornehmlich dafür verantwortlich, dass das Getriebeelement seine Funktion als Teil des Getriebes erfüllt, also die Bewegung der Arbeitseinheit zu kontrollieren, wohingegen der Auffangabschnitt die Auffangfunktion des Getriebeelements erfüllt. Allerdings kann auch der Getriebeabschnitt zusätzlich zu seiner Getriebefunktion beim Auffangen von Spänen oder Staub unterstützen oder mitwirken.

Vorzugsweise erstreckt sich der Auffangabschnitt zumindest teilweise schräg zu dem Getriebeabschnitt. Insbesondere kann der Auffangabschnitt schräg in Richtung des Arbeitswerkzeugs bzw. der Arbeitseinheit geneigt sein, um in dessen Richtung ausgerichtet zu sein und das Auffangen der Späne oder des Staubs zu verbessern. Insbesondere ist der Auffangabschnitt schaufelförmig ausgebildet. So lässt sich eine besonders vorteilhafte Auffanggeometrie darstellen, da sich diese zum Auffangen von Spänen oder Staub ideal erstreckt und entsprechend geformt ist.

Das Getriebeelement, insbesondere der Auffangabschnitt, kann an seiner dem Arbeitswerkzeug zugewandten Seite mit Seitenwänden versehen sein, um einen Kanal für die Späne oder den Staub zu bilden. Die Späne oder der Staub können dadurch ideal durch das Getriebeelement geführt werden. Die Seitenwände verhindern zudem, dass die Späne oder der Staub seitlich von dem Getriebeelement abfallen, nachdem sie von diesem aufgefangen worden sind.

In bevorzugter Ausgestaltung ist das Getriebeelement mit einer Schachtstruktur für die Späne oder den Staub versehen. Vorteilhaft erstrecken sich die Schächte der Schachtstruktur zumindest teilweise von der dem Arbeitswerkzeug zugewandten Seite des Getriebeelements in Richtung zu einem Absaugpunkt hin, sodass die Späne und der Staub nach dem Auffangen abgesaugt werden können. Die Späne oder der Staub werden somit von der dem Arbeitswerkzeug bzw. der Arbeitseinheit zugewandten Seite des Getriebeelements, an welcher die Späne oder der Staub aufgefangen werden, zu dem Absaugpunkt hin geleitet, der insbesondere an der gegenüberliegenden Seite des Getriebeelements angeordnet sein kann, um einen entsprechenden Sicherheitsabstand zwischen einer Absaugvorrichtung und der Arbeitseinheit zu gewährleisten.

Das Getriebeelement und/oder die Arbeitseinheit können einen Absauganschluss zum Anschließen an eine Absaugvorrichtung aufweisen. Vorzugsweise weisen das Getriebeelement und die Arbeitseinheit jeweils einen Absauganschluss auf, und die beiden Absauganschlüsse sind über ein Verbindungsstück miteinander verbunden. Somit lassen sich Späne oder Staub sowohl an dem Getriebeelement als auch an der Arbeitseinheit absaugen, obwohl nur an einem von beiden eine Absaugvorrichtung, beispielsweise ein Staubsauger, angeschlossen ist. Durch das Verbindungsstück liegt der zum Absaugen nötige Unterdruck leistungsgerecht an beiden Absauganschlüssen an.

Das Verbindungsstück ist insbesondere flexibel ausgestaltet, um eine Abstandsänderung zwischen den Absauganschlüssen während eines Arbeitsvorgangs auszugleichen, wobei das Verbindungsstück beispielsweise teleskopierbar, elastisch und/oder als abrollbarer Schlauch ausgebildet ist. Insbesondere kann durch die Bewegung der Arbeitseinheit bzw. des Getriebes eine solche Abstandsänderung erfolgen, die einen Ausgleich erforderlich macht.

Die Arbeitseinheit kann ein Aggregat mit einem zweiteiligen Gehäuse aufweisen, in dem das Arbeitswerkzeug teilweise aufgenommen ist. Die beiden Teile des Gehäuses können gemeinsam eine Kanalstruktur zum Ableiten von Spänen oder Staub, insbesondere zum Ableiten der Späne oder des Staubs zu einem Absaugpunkt hin, ausbilden. Dies ist insbesondere bei dem Ausführen von Zugschnitten vorteilhaft, bei denen die Späne oder der Staub hauptsächlich näherungsweise vertikal nach oben herausgeschleudert werden. Diese Späne oder der Staub können dann von dem Gehäuse des Aggregats aufgefangen und durch die Kanalstruktur abgeleitet werden.

Vorzugsweise weist die Arbeitseinheit eine insbesondere federbelastete Haube für das Arbeitswerkzeug auf, welche ausgebildet ist, auf dem Werkstück aufzusetzen und den Arbeitsbereich während des Arbeitsvorgangs abzuschirmen. Die Haube öffnet entgegen der Federkraft stets nur so weit, wie es aufgrund der Struktur des Werkstücks nötig ist, sodass die Haube den Arbeitsbereich, in dem die Späne entstehen, regelrecht abschirmt und kaum Späne austreten können.

Nachfolgend wird die Erfindung schematisch und beispielhaft unter Bezugnahme auf die Zeichnungen beschrieben. Darin zeigt:
- Fig. 1: zwei Seitenansicht einer Kapp-Zug-Säge, in denen unterschiedliche mögliche Austrittsrichtung von Sägespänen kenntlich gemacht sind,
- Fig. 2: eine Seitenansicht eines Ausführungsbeispiels der erfindungsgemäßen Bearbeitungsmaschine,
- Fig. 3: eine perspektivische Ansicht des Getriebeelements der Bearbeitungsmaschine aus Fig. 2,
- Fig. 4: einen Vertikalschnitt durch das Getriebeelement aus Fig. 3,
- Fig. 5: eine Detailansicht der Bearbeitungsmaschine aus Fig. 2,
- Fig. 6: eine perspektivische Detailansicht zweier durch ein Verbindungsstück verbundener Absauganschlüsse der Bearbeitungsmaschine aus Fig. 2 und
- Fig. 7: eine Schnittansicht des Gehäuses der Arbeitseinheit der Bearbeitungsmaschine aus Fig. 2.

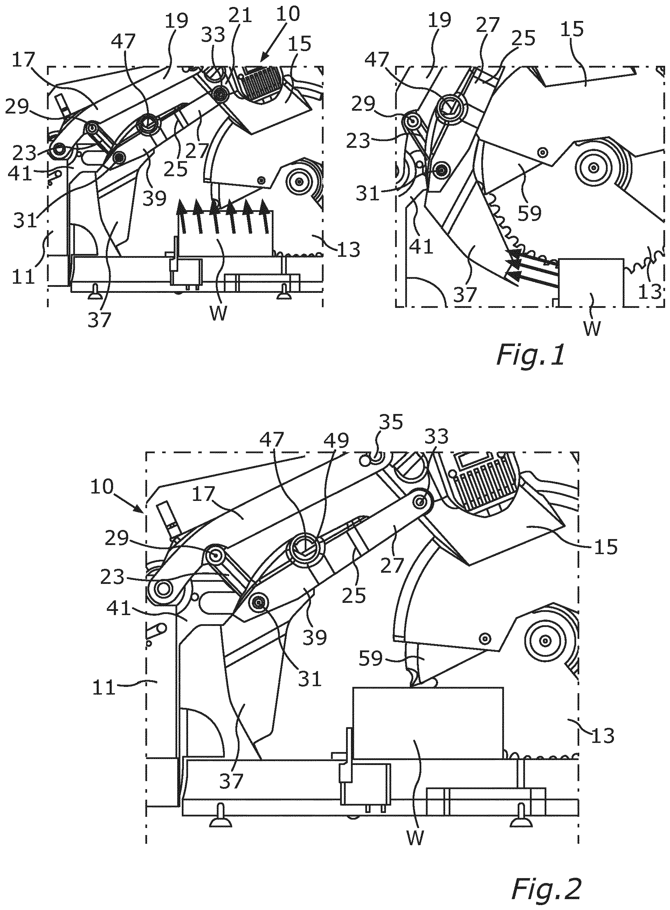

Zunächst zeigt Fig. 1 eine Bearbeitungsmaschine 10, nämlich eine Kapp-Zug-Säge, in Seitenansicht bei zwei unterschiedlichen Schnittarten, wobei in Fig. 1 links ein sogenannter Zugschnitt und rechts ein sogenannter Kappschnitt eines Werkstücks W gezeigt ist. Bei einem Zugschnitt wird das Arbeitswerkzeug 13, also im Ausführungsbeispiel das Sägeblatt, horizontal bewegt, nämlich in Fig. 1 von rechts nach links, wohingegen bei einem Kappschnitt das Arbeitswerkzeug vertikal zu dem Werkstück W bewegt wird, also in Fig. 1 von oben nach unten.

Die Austrittsrichtung von Spänen oder Staub entspricht, wie in Fig. 1 mit Pfeilen angedeutet, der Austrittstangente des Arbeitswerkzeugs 13 aus dem Werkstück W. Somit zeigt Fig. 1 anschaulich, dass sich die Austrittsrichtung von Spänen oder Staub erheblich unterscheidet, je nachdem welche Schnittführung angewendet wird. Während bei einem Zugschnitt Späne oder Staub näherungsweise "nach oben" austreten, ist die Austrittsrichtung bei einem Kappschnitt eher "nach hinten", näherungsweise horizontal vom Anwender weg.

Anhand von Fig. 2 wird im Folgenden die erfindungsgemäße Kapp-Zug-Säge (Bearbeitungsmaschine 10) näher beschrieben. Die Bearbeitungsmaschine 10 weist ein Gestell 11, eine Arbeitseinheit 15 mit einem Arbeitswerkzeug 13 und ein Getriebe 17 auf. Über das Getriebe 17 ist die Arbeitseinheit 15 an dem Gestell 11 angebracht relativ zu dem Gestell 11 geführt, sodass eine Arbeitsbewegung der Arbeitseinheit 15 zugelassen wird.

Das Getriebe 17 weist einen Zweischlag und einen Mechanismus zur Beschränkung eines durch den Zweischlag vorgegebenen Arbeitsbereichs der Arbeitseinheit 15 auf. Der Zweischlag umfasst ein an das Gestell 11 angebundenes erstes Getriebeglied 19 und ein durch ein Getriebegelenk 35 mit dem ersten Getriebeglied 19 verbundenes zweites Getriebeglied 21. Am Ende des zweiten Getriebeglieds 21 ist die Arbeitseinheit 15 befestigt. Der Mechanismus zur Beschränkung des durch den Zweischlag vorgegebenen Arbeitsbereichs der Arbeitseinheit 15 umfasst ein drittes Getriebeglied 23 und ein viertes Getriebeglied 25. Das dritte Getriebeglied 23 ist durch ein erstes Gelenk 29 mit dem ersten Getriebeglied 19 verbunden. Außerdem ist das vierte Getriebeglied 25 durch ein zweites Gelenk 31 mit dem dritten Getriebeglied 23 und durch ein drittes Gelenk 33 mit dem zweiten Getriebeglied 21 verbunden.

Das zweite Gelenk 31 ist in einem horizontalen Langloch einer Kulisse 41 linear geführt. Zudem ist die gesamte Kulisse 41 mittels einer vertikalen Linearführung verfahrbar an dem Gestell 11 angebracht (nicht dargestellt). Aufgrund der beiden Linearführungen ist das zweite Gelenk 31 innerhalb eines begrenzten, in Seitenansicht rechteckförmigen Bereichs beweglich. Eine solche Ausgestaltung mit dem Getriebe 17 erlaubt es dem Anwender aufgrund des Getriebefreiheitsgrad von f = 2, das Sägeaggregat undefiniert in einer lediglich durch die Länge der Getriebeglieder beschränkten und planaren Arbeitsebene zu bewegen.

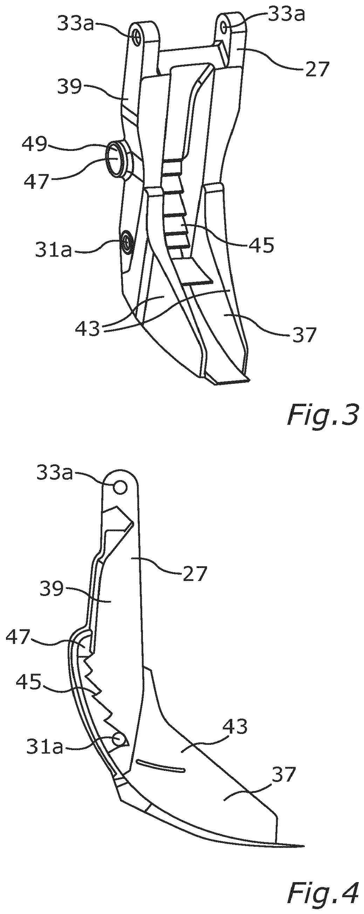

Das Getriebe 17 weist ein Getriebeelement 27 auf, welches im vorliegenden Ausführungsbeispiel dem vierten Getriebeglied 25 entspricht und im Detail in Fig. 3 und 4 gezeigt ist. Das Getriebeelement 27 ist mit zwei Lagerstellen 31a, 33a versehen, wobei die Lagerstelle 31a für das zweite Gelenk 31 vorgesehen ist und die Lagerstelle 33a für das dritte Gelenk 33 vorgesehen ist. Zwischen diesen beiden Lagerstellen 31a, 33a erstreckt sich ein Getriebeabschnitt 39 des Getriebeelements 27, der im Wesentlichen die Funktion des Getriebeelements 27 als Teil des Getriebes 17 sicherstellt.

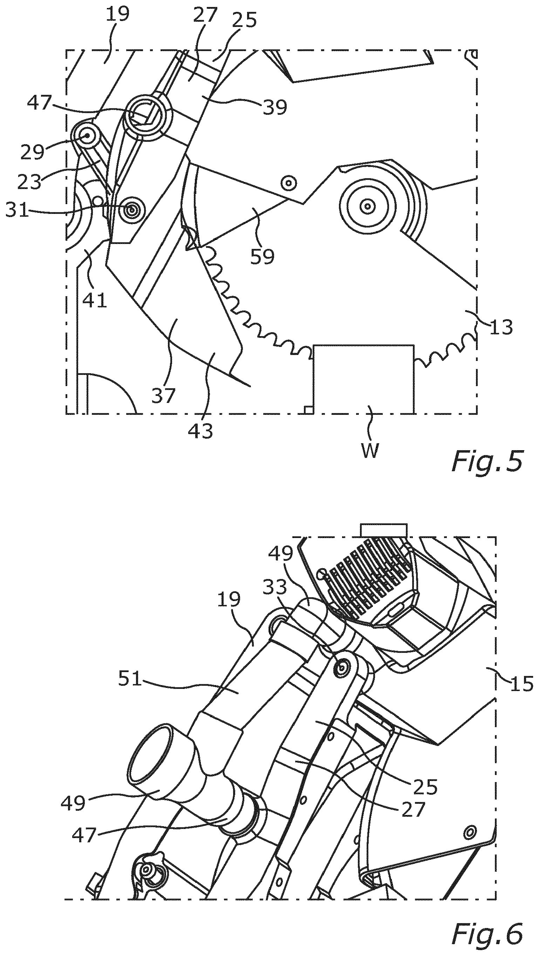

Darüber hinaus weist das Getriebeelement 27 einen Auffangabschnitt 37 auf, der im Wesentlichen die Aufgabe hat, Späne oder Staub aufzufangen, die beim Bearbeiten eines Werkstücks W mit dem Arbeitswerkzeug 13 auftreten, siehe beispielsweise Fig. 5. Der Auffangabschnitt 37 und der Getriebeabschnitt 39 sind im vorliegenden Ausführungsbeispiel zweiteilig ausgebildet und beispielsweise form- oder stoffschlüssig, etwa mittels einer Schnapp- oder Klebeverbindung, zusammengefügt. Jedoch können der Auffangabschnitt 37 und der Getriebeabschnitt 39, also das gesamte Getriebeelement 27, grundsätzlich auch einteilig ausgebildet werden. Zudem kann auch der Getriebeabschnitt 39 zusätzlich zu seiner Getriebefunktion beim Auffangen von Spänen oder Staub unterstützen oder mitwirken.

Wie Fig. 3 und 4 zeigen, erstreckt sich der Auffangabschnitt 37 teilweise schräg zu dem Getriebeabschnitt 39 und ist schaufelförmig ausgebildet. Der Auffangabschnitt 37 weist eine entsprechende Krümmung auf, wobei der Auffangabschnitt 37 in eine dem Arbeitswerkzeug 13 zugewandte Richtung geneigt bzw. gekrümmt ist, sodass sich eine zum Abführen der Späne bzw. des Staubs vorteilhafte Geometrie ergibt. Zudem ist der Auffangabschnitt 37 mit Seitenwänden 43, die die gekrümmte Fläche des Auffangabschnitts 37 seitlich und an der dem Arbeitswerkzeug 13 zugewandten Seite begrenzen, sodass aufgefangene Späne oder Staub nicht wieder seitlich von dem Getriebeelement 27 abfallen, sondern in den von den Seitenwänden 43 begrenzten Kanal geführt werden.

Wie Fig. 3 und 4 weiter zeigen, ist das Getriebeelement 27 mit einer Schachtstruktur 45 versehen, die sich insbesondere an den oben angesprochenen Kanal anschließt. Die Schachtstruktur 45 umfasst mehrere Schächte, die sich näherungsweise parallel zueinander erstrecken, und zwar von der dem Arbeitswerkzeug 13 zugewandten Seite des Getriebeelements 27 in Richtung zu seiner dem Arbeitswerkzeug 13 abgewandten Seite. An dieser ist ein Absaugpunkt 47 mit einem Absauganschluss 49 vorgesehen, sodass die Späne oder der Staub über die Schachtstruktur 45 zu dem Absaugpunkt 47 geführt werden und dort abgesaugt werden.

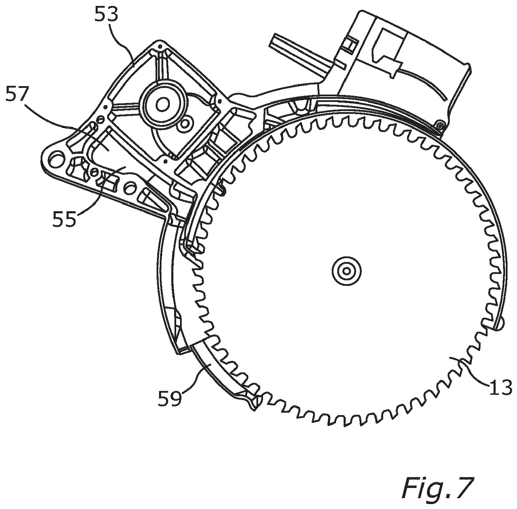

Wie insbesondere aus Fig. 6 und 7 ersichtlich, weist die Arbeitseinheit 15 ein zweiteiliges Gehäuse 53 für das Arbeitswerkzeug 13 auf. Die beiden Teile des Gehäuses 53 bilden gemeinsam eine Kanalstruktur 55 aus, die zu dem Arbeitswerkzeug 13 hin offen ist und auf ihrer gegenüberliegenden Seite zu einem Absaugpunkt 57 führt. An dem Absaugpunkt 57 ist ein weiterer Absauganschluss 49 vorgesehen.

Zudem ist die Arbeitseinheit 15 mit einer federbelasteten Haube 59 für das Arbeitswerkzeug 13 versehen, welche insbesondere bei großen Werkstücken W aufliegt und den Arbeitsbereich während des Arbeitsvorgangs abschirmt, wie in Fig. 2 gezeigt.

Die beiden Absauganschlüsse 49 des Getriebeelement 27 und der Arbeitseinheit 15 sind, wie Fig. 6 zeigt, über ein Verbindungsstück 51 miteinander verbunden, das insbesondere teleskopierbar oder elastisch ausgebildet sein kann. Aufgrund der Verbindungsstücks 51 ist es möglich, dass an beiden Absaugpunkten 47, 57 gleichzeitig mit nur einer Saugvorrichtung (nicht gezeigt) abgesaugt werden kann, da durch das Verbindungsstück 51 der zum Absaugen nötige Unterdruck leistungsgerecht an beiden Absauganschlüssen 49 anliegt.

Mit der beschriebenen Struktur ist es somit möglich, bei beiden in Fig. 1 gezeigten Schnittarten (Zugschnitt, Kappschnitt) eine ideale Abführung und -saugung von Spänen oder Staub zu erzielen. Während bei Kappschnitten der Arbeitsbereich durch die Haube 59 abgeschirmt wird und Späne oder Staub über die Kanalstruktur 55 des Gehäuses 53 abgeführt und absaugt werden, werden Späne oder Staub bei einem Zugschnitt über das Getriebeelement 27 aufgefangen und über die Schachtstruktur 45 abgeführt und abgesaugt. Somit bringt die Bearbeitungsmaschine 10 eine ideale Absaugung von Spänen oder Staub mit sich und nutzt hierfür teilweise Elemente ihres Getriebes 17.

### Bezugszeichenliste

- 10: Bearbeitungsmaschine
- 11: Gestell
- 13: Arbeitswerkzeug
- 15: Arbeitseinheit
- 17: Getriebe
- 19: erstes Getriebeglied
- 21: zweites Getriebeglied
- 23: drittes Getriebeglied
- 25: viertes Getriebeglied
- 27: Getriebeelement
- 29: erstes Gelenk
- 31: zweites Gelenk
- 31a: Gelenkstelle
- 33: drittes Gelenk
- 33a: Gelenkstelle
- 35: Getriebegelenk
- 37: Auffangabschnitt
- 39: Getriebeabschnitt
- 41: Kulisse
- 43: Seitenwand
- 45: Schachtstruktur
- 47: Absaugpunkt
- 49: Absauganschluss
- 51: Verbindungsstück
- 53: Gehäuse
- 55: Kanalstruktur
- 57: Absaugpunkt
- 59: Haube
- W: Werkstück

## Patentansprüche

1. Elektrische Bearbeitungsmaschine (10), insbesondere Säge, umfassend, ein Gestell (11),
eine Arbeitseinheit (15), die ein Arbeitswerkzeug (13) aufweist, und
ein Getriebe (17), über welches die Arbeitseinheit (15) an dem Gestell (11) angebracht ist und welches ausgebildet ist, eine geführte Arbeitsbewegung der Arbeitseinheit (15) relativ zu dem Gestell (11) zu ermöglichen, wobei das Getriebe (17) ein Getriebeelement (27) aufweist, das zum Auffangen von Spänen oder Staub, die beim Bearbeiten eines Werkstücks (W) mit dem Arbeitswerkzeug (13) auftreten, ausgebildet ist.

2. Bearbeitungsmaschine (10) nach Anspruch 1,
wobei das Getriebe (17) einen Zweischlag, der ein erstes Getriebeglied (19) und ein durch ein Getriebegelenk (35) mit dem ersten Getriebeglied (19) verbundenes zweites Getriebeglied (21) umfasst, und einen Mechanismus zur Beschränkung eines durch den Zweischlag vorgegebenen Arbeitsbereiches der Arbeitseinheit (15), der ein drittes Getriebeglied (23) und ein viertes Getriebeglied (25) umfasst, aufweist, wobei das dritte Getriebeglied (23) durch ein erstes Gelenk (29) mit dem ersten Getriebeglied (19) verbunden ist und das vierte Getriebeglied (25) durch ein zweites Gelenk (31) mit dem dritten Getriebeglied (23) und durch ein drittes Gelenk (33) mit dem zweiten Getriebeglied (21) verbunden ist.

3. Bearbeitungsmaschine (10) nach Anspruch 2,
wobei das vierte Getriebeglied (25) dem Getriebeelement (27) zum Auffangen von Spänen oder Staub entspricht.

4. Bearbeitungsmaschine (10) nach einem der vorstehenden Ansprüche, wobei das Getriebeelement (27) wenigstens eine, vorzugsweise zwei Lagerstellen (31a, 33a) für ein Gelenk aufweist, insbesondere für das zweite Gelenk (31) und/oder das dritte Gelenk (33).

5. Bearbeitungsmaschine (10) nach Anspruch 4,
wobei das Getriebeelement (27) einen Auffangabschnitt (37) und einen sich vorzugsweise zwischen den Lagerstellen (31a, 33a) erstreckenden Getriebeabschnitt (39) aufweist.

6. Bearbeitungsmaschine (10) nach Anspruch 5,
wobei sich der Auffangabschnitt (37) zumindest teilweise schräg zu dem Getriebeabschnitt (39) erstreckt und insbesondere schaufelförmig ausgebildet ist.

7. Bearbeitungsmaschine (10) nach einem der vorstehenden Ansprüche, wobei das Getriebeelement (27), insbesondere der Auffangabschnitt (37), an seiner dem Arbeitswerkzeug (13) zugewandten Seite mit Seitenwänden (43) versehen ist, um einen Kanal für die Späne oder den Staub zu bilden.

8. Bearbeitungsmaschine (10) nach einem der vorstehenden Ansprüche, wobei das Getriebeelement (27) mit einer Schachtstruktur (45) für die Späne oder den Staub versehen ist.

9. Bearbeitungsmaschine (10) nach Anspruch 8,
wobei sich die Schächte der Schachtstruktur (45) zumindest teilweise von der dem Arbeitswerkzeug (13) zugewandten Seite des Getriebeelements (27) in Richtung zu einem Absaugpunkt (47) hin erstrecken.

10. Bearbeitungsmaschine (10) nach einem der vorstehenden Ansprüche, wobei das Getriebeelement (27) und/oder die Arbeitseinheit (15) einen Absauganschluss (49) zum Anschließen an eine Absaugvorrichtung aufweisen.

11. Bearbeitungsmaschine (10) nach Anspruch 10,
wobei das Getriebeelement (27) und die Arbeitseinheit (15) jeweils einen Absauganschluss (49) aufweisen und die beiden Absauganschlüsse (49) über ein Verbindungsstück (51) miteinander verbunden sind.

12. Bearbeitungsmaschine (10) nach Anspruch 11,
wobei das Verbindungsstück (51) flexibel ausgestaltet ist, um eine Abstandsänderung zwischen den Absauganschlüssen (49) während eines Arbeitsvorgangs auszugleichen, wobei das Verbindungsstück (51) beispielsweise teleskopierbar, elastisch und/oder als abrollbarer Schlauch ausgebildet ist.

13. Bearbeitungsmaschine (10) nach einem der vorstehenden Ansprüche, wobei die Arbeitseinheit (15) ein Aggregat mit einem zweiteiligen Gehäuse (53) aufweist, in dem das Arbeitswerkzeug (13) teilweise aufgenommen ist, wobei die beiden Teile des Gehäuses (53) gemeinsam eine Kanalstruktur (55) zum Ableiten von Spänen oder Staub, insbesondere zum Ableiten der Späne oder des Staubs zu einem Absaugpunkt (57) des Gehäuses (53) hin, ausbilden.

14. Bearbeitungsmaschine (10) nach einem der vorstehenden Ansprüche, wobei die Arbeitseinheit (15) eine insbesondere federbelastete Haube (59) für das Arbeitswerkzeug (13) aufweist, welche ausgebildet ist, auf dem Werkstück (W) aufzusetzen und den Arbeitsbereich während des Arbeitsvorgangs abzuschirmen.
